# EUROPÄISCHE PATENTANMELDUNG

(11) **EP 1 262 386 A2**
(43) Veröffentlichungstag der Anmeldung: **04.12.2002**
(21) Anmeldenummer: 01131023.2
(22) Anmeldetag: 29.12.2001
(51) Int. Cl.: B60S 1/08, G01N 21/45

(54) **Verfahren zum Betreiben eines Regensensors sowie Regensensor zur Durchführung des Verfahrens**

(30) Priorität: 01.06.2001 DE 10126953
(71) Anmelder: ROBERT BOSCH GMBH, 70442 Stuttgart (DE)
(72) Erfinder: Hog, Norbert, 77815 Buehl (DE); Hodapp, Bruno, 77855 Achern-Oensbach (DE); Schneider, Andreas, 77815 Buehl (DE)

(57) **Zusammenfassung**

Es wird ein Verfahren zum Betreiben eines Regensensors, sowie ein Regensensor für ein Kraftfahrzeug vorgeschlagen, mit einem, Strahlung getaktet abgebenden Sender (10), der nach einem festgelegten Schema (S) in mehreren konstanten Leistungsstufen abstrahlt wobei mindestens zwei der konstanten Leistungsstufen größer als Null sind.

## Beschreibung

### Stand der Technik

Die Erfindung betrifft ein Verfahren zum Betreiben eines Regensensors und einen Regensensor nach Gattung der unabhängigen Ansprüche.

Es sind schon zahlreiche Regensensoren und Verfahren zum Betreiben solcher, beispielsweise aus der DE 196 21 627 A1 bekannt. Diese weisen einen Sender auf, der Licht in Richtung einer Scheibe abstrahlt, welches dort in Abhängigkeit von der Benetzung der Scheibe reflektiert wird. Zur Bestimmung der Benetzung wird diese reflektierte Strahlung mittels eines Empfängers gemessen. Um Störungen, welche durch Fremdlicht hervorgerufen werden, zu eliminieren wird der Sender getaktet ein- und ausgeschaltet. Der Empfänger kann dabei die einstrahlende Fremdlichtmenge in den Phasen ermitteln, in denen der Sender ausgeschaltet ist. Dadurch wird ein Signal für die Nutzlichtmenge generiert, welchen von Fremdlichteinflüssen korrigiert ist.

### Vorteile der Erfindung

Das erfindungsgemäße Verfahren mit den Merkmalen des Hauptanspruchs hat den Vorteil, dass auch Störungen eliminierbar sind, die aus der elektronischen Schaltung als solche resultieren. Der Sender strahlt dazu nach einem festgelegten Schema in mehreren konstanten Leistungsstufen ab, wobei mindestens zwei konstante Leistungsstufen größer als Null sind. Auf diese Weise ist es möglich, elektromagnetische Störungen, die beispielsweise auf Einstrahlungen von Mobilfunkgeräten und Funksendern zurückzuführen sind, zu eliminieren.

Durch die in den Unteransprüchen aufgeführten Maßnahmen, ergeben sich vorteilhafte Weiterbildungen und Verbesserungen der im Hauptanspruch angegebenen Merkmale.

Vorteilhaft ist dabei insbesondere wenn der Sender in zwei konstanten Leistungsstufen abstrahlt. Dadurch kann der Sender mit einem einfachen Rechtecksignal getaktet werden.

Besonders vorteilhaft ist dabei, wenn der Sender mit einer Arbeitsleistung und einer reduzierten Leistung abstrahlt, da während der Abstrahlung der Arbeitsleistung eine optimale Empfindlichkeit des Regensensors erreicht wird und bei Abstrahlung mit einer reduzierten Leistung Störungen in ausreichender Genauigkeit detektiert werden können.

Strahlt der Sender abwechselnd zwischen Arbeitsleistung und reduzierter Leistung ab, so wird vorteilhafter Weise die Störung und das Signal sehr zeitnah detektiert, wodurch die Genauigkeit des Verfahrens weiter erhöht wird.

Besonders vorteilhaft ist es, wenn die Arbeitsleistung im Bereich der maximalen Abstrahlung des mindestens einen Senders liegt und/oder die reduzierte Leistung zwischen der Hälfte und einem Zwanzigstel der Arbeitsleitung beträgt, um ein ausreichendes Kontrastverhältnis zwischen Nutzsignal und Störsignal zu erhalten.

Ist das Schema nach dem der Sender in den verschiedenen konstanten Leistungsstufen abstrahlt fest vorgegeben, so ist das Verfahren einfach zu implementieren da die einzelnen Leistungsabschnitte fest in einer Tabelle abgelegt werden können.

Weiterhin ist es vorteilhaft das Schema durch einen Zufallsgenerator vorgeben zu lassen um periodisch auftretende Störungen ebenfalls eliminieren zu können.

Besonders vorteilhaft ist es, wenn eine Steuereinrichtung und ein Empfänger vorgesehen sind und der Empfänger die vom Sender abgestrahlte Strahlung detektiert und ein davon abhängiges Signal abgibt, wobei die Steuereinrichtung aus dem Signal welches in mehreren konstanten Leistungsstufen abgestrahlt wird, Störungen eliminiert.

Eine einfache und vorteilhafte Möglichkeit Störungen zu eliminieren ist dadurch gegeben, daß die vom Empfänger in Phasen reduzierter Senderleistung abgegebenen Signale von den Signalen in Phasen höherer Senderleistung, insbesondere der Arbeitsleistung, subtrahiert werden.

Weiterhin ist es von besonderem Vorteil, wenn zwischen den einzelnen Phasen in denen der Sender eine Senderleistung abgibt, jeweils Pausen, also Phasen in denen der Sender keine Leistung, d.h. Nullleistung abgibt, vorgesehen sind. Die opto-elektronischen Sender neigen zum Nachleuchten, geben also nach abschalten der Stromzufuhr noch Sendeleistung ab. Pausiert der Sender zumindest während dieser Zeit, so werden Verfälschungen der Messungen vermieden.

Ein erfindungsgemäßer Regensensor mit den Merkmalen des Anspruchs 11 hat den Vorteil, dass durch einen Sender, der Strahlung nach einem festgelegten Schema in mehreren konstanten Leistungsstufen abzustrahlen vermag, wobei mindestens zwei der konstanten Leistungsstufen größer als Null sind, ein verbessertes Signal zur Feuchtigkeitsdetektion zur Verfügung steht. Dadurch sind beispielsweise Scheibenreinigungseinrichtungen besser ansteuerbar, da Fehlauslösungen der Scheibenwischer vermieden werden können und keine unnötigen Wischvorgänge auf trockener Scheibe die Wischblätter vorzeitig verschleißen lassen.

### Zeichnungen

Ein Ausführungsbeispiel der Erfindung ist in den Zeichnungen dargestellt und in der nachfolgenden Beschreibung näher erläutert. Es zeigen:
Fig. 1 einen erfindungsgemäßen Regensensor in schematischer Darstellung,
Fig. 2 ein Diagramm der von einem Sender abgegebenen Strahlungsleistung über der Zeit gemäß dem erfindungsgemäßen Verfahren,
Fig. 3 eine Variation des Verfahrens nach Fig 2 und
Fig. 4 eine weitere Variation des erfindungsgemäßen Verfahrens.

### Beschreibung des Ausführungsbeispiels

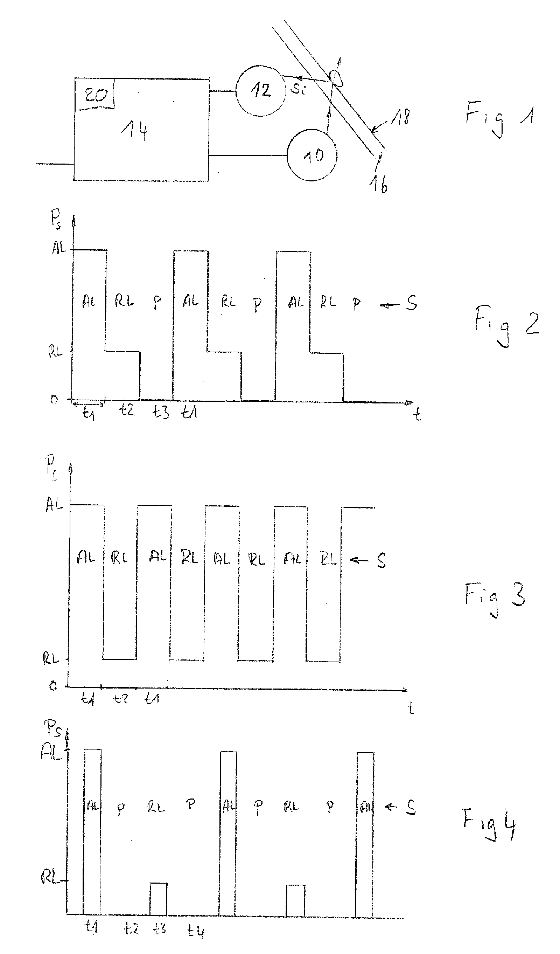

In Fig. 1 ist ein erfindungsgemäßer Regensensor schematisch dargestellt. Dieser besteht im Wesentlichen aus einem Sender 10 und einem Empfänger 12 die beide mit einer Steuereinrichtung 14 verbunden sind. Üblicherweise ist der Regensensor an einer Scheibe 16, beispielsweise der Windschutzscheibe eines Kraftfahrzeugs befestigt. Der Sender 10 emittiert dabei Strahlung derart, dass diese an einer Grenzfläche 18, die die Scheibe 16 mit der Luft bildet, totalreflektiert wird, wenn an der Grenzfläche 18 kein detektierbarer Schmutz- oder Feuchtigkeitsbelag vorhanden ist. Dies ist beispielsweise bei einer sauberen und trockenen Scheibe 16 der Fall. Die Strahlung wird dann an der Grenzfläche 18 totalreflektiert und vom Empfänger 12 detektiert, der ein entsprechendes Signal an die Steuereinrichtung 14 weiterleitet.

Der Sender 10 gibt die Strahlung erfindungsgemäß getaktet nach einem Schema S in mehreren konstanten Leistungsstufen ab. Dies ist in Fig. 2 dargestellt. Für eine erste Zeitdauer T1 strahlt der Sender 10 mit der Arbeitsleistung AL ab. Während einer darauffolgenden zweiten Zeitdauer T2 strahlt der Sender mit reduzierter Leistung RL ab um während einer dritten Zeitdauer T3 keine Leistung abzugeben. Dieses Schema S wiederholt sich periodisch, so dass nach der dritten Zeitdauer T3 wieder für eine erste Zeitdauer T1 die Arbeitsleistung vom Sender 10 abgestrahlt wird. Die einzelnen Zeitdauern T1, T2 und T3 können dabei gleich, oder auch unterschiedlich sein.

In Fig. 3 ist ein weiteres Schema S gezeigt. Während der ersten Zeitdauer T1 wird die Arbeitsleistung abgestrahlt und während der darauffolgenden zweiten Zeitdauer T2 die reduzierte Leistung RL usw.

Figur 4 zeigt eine weitere Variation des erfindungsgemäßen Verfahrens. Für eine kurze erste Zeitdauer T1 wird vom Sender 10 die Arbeitsleistung AL abgegeben. Diese erste Zeitdauer T1 liegt bei etwa 100 Mikrosekunden. Darauf folgt eine Pause der zweiten Zeitdauer T2 von etwa einer halben Millisekunde vorauf eine kurze Abstrahlung des Senders 10 mit reduzierter Leistung RL für etwa 100 Mikrosekunden folgt. Anschließend pausiert der Sender 10 während einer vierten Zeitdauer T4 wieder für etwa eine halbe Millisekunde. Damit gibt der Sender 10 Blitze mit einer Frequenz im Kiloherz-Bereich ab, die zwischen der Arbeitsleistung AL und der reduzierten Leistung RL abwechseln.

Die Steuereinrichtung 14 empfängt das Signal des Empfängers 12, welches ebenfalls eine solche Modulation wie die des Senders 10 aufweist. Darüber hinaus ist dieses Signal beispielsweise durch elektromagnetische Einstrahlungen, und elektromagnetische Offsetverschiebungen verändert. Werden die Signale Si, die der Empfänger 12 an die Steuereinrichtung 14 abgibt, während der Zeit, in der der Sender 10 die Arbeitsleistung abstrahlt sowie in der Zeit in der der Sender 10 die reduzierte Leistung abstrahlt, getrennt voneinander erfaßt, so können sämtliche nicht linear mit der Senderabstrahlleistung auftretenden Störungen, wie beispielsweise Störungen der elektronischen Schaltung als solcher, die in der Steuereinrichtung 14 angeordnet ist, eliminiert werden. Dies kann, bei einfachen Signaloffsets, die in der Nähe von starken Radiosendern auftreten, durch einfache Subtraktion eliminiert werden.

Dazu wird das Signal während einer Messung mit reduzierter Leistung RL von einer darauffolgenden Messung mit Arbeitsleistung AL abgezogen, da die optischen Bauelemente des Sender 10 zum nachleuchten neigen. Prinzipiell ist es auch möglich mehrere Messungen aufzuaddieren und erst dann entsprechende Subtraktionen vorzunehmen oder andere, ausgefeiltere und komplexere Algorithmen zu verwenden.

Natürlich kann das hier beschriebene Verfahren mit weiteren Verfahren zum Betreiben von Regensensoren kombiniert werden. Durch das erfindungsgemäße Verfahren wird das Signal des Empfängers 12 nur von Störeinflüssen befreit. Beispielsweise kann das Verfahren mit einem Auswerteverfahren wie in der DE 195 19 501 A1 gezeigt kombiniert werden.

Weiterhin ist es möglich das Schema S auch durch ein Helligkeitssignal einer automatischen Lichtsteuerung zu bestimmen oder zu verändern.

Das Schema S kann auch von einem Zufallsgenerator 20 vorgegeben werden, so dass die verschiedenen Leistungsstufen und deren jeweiligen Dauer innerhalb eines festgelegten Rahmens beliebig aufeinander folgen können.

## Patentansprüche

1. Verfahren zum Betreiben eines Regensensors, insbesondere für ein Kraftfahrzeug, mit mindestens einem, Strahlung getaktet abgebenden Sender (10), **dadurch gekennzeichnet, daß** der mindestens eine Sender (10) nach einem festgelegten Schema (S) in mehreren konstanten Leistungsstufen abstrahlt und mindestens zwei der konstanten Leistungsstufen größer als Null sind.

2. Verfahren nach Anspruch 1, **dadurch gekennzeichnet, daß** der mindestens eine Sender (10) in zwei konstanten Leistungsstufen abstrahlt.

3. Verfahren nach Anspruch 2, **dadurch gekennzeichnet, daß** der mindestens eine Sender (10) mit einer Arbeitsleistung (AL) und einer reduzierten Leistung (RL) abstrahlt.

4. Verfahren nach Anspruch 3, **dadurch gekennzeichnet, daß** der mindestens eine Sender (10) abwechselnd zwischen der Arbeitsleistung (AL) und der reduzierten Leistung (RL) abstrahlt.

5. Verfahren nach einem der Ansprüche 2 bis 4, **dadurch gekennzeichnet, daß** die Arbeitsleistung (AL) im Bereich der maximalen Abstrahlleistung des mindestens einen Senders (10) liegt und/oder die reduzierte Leistung (RL) zwischen der Hälfte und einem Zwanzigstel der Arbeitsleistung beträgt.

6. Verfahren nach einem der Ansprüche 1, 2, 3 oder 5, **dadurch gekennzeichnet, daß** das Schema (S) fest vorgegeben ist.

7. Verfahren nach einem der Ansprüche 1, 2, 3 oder 5, **dadurch gekennzeichnet, daß** das Schema (S) durch einen Zufallsgenerator (20) vorgegeben wird.

8. Verfahren nach einem der vorhergehenden Ansprüche, **dadurch gekennzeichnet, daß** eine Steuereinrichtung (14) und ein Empfänger (12) vorgesehen sind und der Empfänger (12) die von dem mindestens einen Sender (10) abgestrahlte Strahlung zumindest teilweise detektiert und ein davon abhängiges Signal (Si) abgibt und die Steuereinrichtung (14) aus dem Signal (Si) Störungen eliminiert.

9. Verfahren nach Anspruch 8, **dadurch gekennzeichnet, daß** die Steuereinrichtung (14) zur Eliminierung von Störungen das Signal (Si), das während der Zeitdauer detektiert wird zu der der Sender (10) die reduzierte Leistung (RL) abgibt vom Signal (Si) das während der Zeitdauer detektiert wird zu der der Sender (10) die Arbeitsleistung (AL) abgibt, subtrahiert.

10. Verfahren nach einem der vorhergehenden Ansprüche, **dadurch gekennzeichnet, daß** das Schema derart festgelegt ist, daß jeweils zwischen den konstanten Leistungsstufen ungleich Null eine Leistungsstufe mit Nullleistung vorgesehen ist.

11. Regensensor, insbesondere zur Durchführung des Verfahrens nach einem der vorhergehenden Ansprüche, mit mindestens einem Sender (10), der eine Strahlung getaktet abzugeben vermag, **dadurch gekennzeichnet, daß** der mindestens eine Sender (10) nach einem festgelegten Schema (S), in mehreren konstanten Leistungsstufen abzustrahlen vermag und mindestens zwei der konstanten Leistungsstufen größer als Null sind.
